# EUROPEAN PATENT APPLICATION

(11) **EP 4 292 481 A1**
(43) Date of publication of application: **20.12.2023**
(21) Application number: 22214429.7
(22) Date of filing: 19.12.2022
(51) Int. Cl.: A47J 27/06, A47J 27/21, A47J 36/38

(54) **A LID BODY ASSEMBLY AND A LIQUID HEATING CONTAINER**

(30) Priority: 14.06.2022 CN 202210672956
(71) Applicant: Zhejiang Shaoxing Supor Domestic Electrical Appliance Co., Ltd., Shaoxing, Zhejiang 312000 (CN)
(72) Inventor: MEI, Chenmin, Shaoxing, 312000 (CN)
(74) Representative: LLR

(57) **Abstract**

The present application provides a lid body assembly and a liquid heating container. The lid body assembly comprises: a lower lid (10), a middle lid (20) and an anti-tilting assembly (30), the lower lid and the middle lid enclosing an accommodating chamber in which the anti-tilting assembly is arranged, the anti-tilting assembly comprising a lower gas inlet, an upper gas outlet (334) and a vapor passage putting the lower gas inlet and the upper gas outlet in communication, the lower gas inlet of each anti-tilting assembly being in communication with one vapor inlet (110), the anti-tilting assembly further comprising a mobile sealing member (320) capable of moving in the anti-tilting assembly so as to block or open the upper gas outlet; a pressure releasing tube (113) extending in a direction of the height of the vapor passage and having a lower end capable of being in communication with the container body (50) and an upper end in communication with the upper gas outlet; when the liquid heating container is in a tilted state, the mobile sealing member in the anti-tilting assembly in a lower position is capable of blocking the upper gas outlet in a lower position, while the mobile sealing member in the anti-tilting assembly in an upper position is capable of opening the upper gas outlet in an upper position.

## Description

### Technical Field

The present application relates to the technical field of home electrical appliances, and in particular to a liquid heating container.

### Background

Currently, existing electric kettles are designed with an anti-tilting structure to prevent spilling when the kettles tilt. Most existing anti-tilting structures achieve an anti-tilting function by means of two venting tubes transversally arranged in a kettle lid. In this type of structure, when a kettle tilts, the lower venting tube is blocked, preventing water in the kettle from spilling out; the upper venting tube is opened for venting, so as to ensure a stable pressure in the kettle. However, if the water sloshes when the kettle tilts, which makes the upper venting tube blocked by the sloshing water, then a high pressure will be generated inside the kettle. However, at this moment, the high pressure can be released only via the venting tube, which could easily cause massive eruption of a mixture of water and vapor out of the venting tube and thus cause a danger.

### Summary of the Invention

The present application aims to at least solve the problem existing in the prior art or relevant art that a venting tube is blocked by water, resulting in a high pressure inside a kettle body and eruption of a mixture of water and vapor out of the venting tube.

To this end, a first aspect of the present application consists in providing a lid body assembly.

A second aspect of the present application consists in providing a liquid heating container.

According to the first aspect of the present invention, a lid body assembly is provided and used for covering an opening at the top of a container body of a liquid heating container, the lid body assembly comprising: a lower lid provided with at least two vapor inlets that pass through the lower lid; a middle lid connected above the lower lid and, together with the lower lid, enclosing an accommodating chamber; an anti-tilting assembly arranged in the accommodating chamber and comprising a lower gas inlet, an upper gas outlet and a vapor passage putting the lower gas inlet and the upper gas outlet in communication, the lower gas inlet of each anti-tilting assembly in communication with one vapor inlet, the anti-tilting assembly further comprising a mobile sealing member capable of moving inside the anti-tilting assembly so as to block or open the upper gas outlet; a pressure releasing tube extending in a direction of the height of the vapor passage and having a lower end capable of being in communication with the container body and an upper end in communication with the upper gas outlet; when the liquid heating container is in a tilted state, the mobile sealing member in the anti-tilting assembly in a lower position is capable of blocking the upper gas outlet in a lower position, while the mobile sealing member in the anti-tilting assembly in an upper position is capable of opening the upper gas outlet in an upper position.

The lid body assembly proposed by the embodiment of the present aspect comprises the lower lid, the middle lid and at least two of the anti-tilting assembly, which anti-tilting assembly comprises the upper gas outlet, the lower gas inlet in communication with the vapor inlet and the mobile sealing member capable of moving to a position of blocking the upper gas outlet so that a sealed space is formed inside the blocked anti-tilting assembly and thus the passageway of the vapor inlet on the lower lid is blocked by means of the anti-tilting assembly, for the purpose of preventing water from spilling out of the vapor inlet when the liquid heating container is tilted. The pressure releasing tube is provided in the anti-tilting assembly. When the liquid heating container is in an upright state, vapor inside the container body can enter the anti-tilting assembly via the vapor passage and the pressure releasing tube respectively and then be discharged via the upper gas outlet; when the liquid heating container is in a tilted state, the mobile sealing member in the anti-tilting assembly in a lower position is capable of blocking the upper gas outlet in a lower position, preventing water from spilling out, while the mobile sealing member in the anti-tilting assembly in an upper position is capable of opening the upper gas outlet in an upper position, so that the anti-tilting assembly in an upper position remains pass-through, ensuring that vapor is capable of flowing out via the vapor passage and the pressure releasing tube to prevent the danger of an excessive pressure inside the container body due to vapor unable to be discharged. Further, by providing two passageways via the pressure releasing tube and via the vapor passage for discharging vapor, even if tilting leads to sloshing of water inside the container body and occasionally a small quantity of water rushes towards the vapor passage and the pressure releasing tube in an upper position due to the pressure and sloshing, as the vapor passage and the pressure releasing tube are two passageways not in communication with each other, pressure can still be released, even if one passageway among the two is blocked, via the other passageway, which allows vapor inside the container body to be more easily released and accelerates the restoration of the balance between the interior pressure and the exterior pressure of the container body. The design of the vapor passage and the pressure releasing tube effectively achieves the separation of vapor from water, prevents the danger of massive eruption of a mixture of water and vapor due to a high pressure inside the container body, and reduces eruption of high temperature water vapor when the liquid heating container is in a hot state and under the effect of the vapor pressure.

Further, compared with venting tubes transversally arranged on a kettle lid in the relevant art, the technical solution of the present application, by integrating the pressure releasing tube and the vapor passage in a circular tube, saves internal space of the anti-tilting assembly and simplifies the gas guiding structure, resulting in the anti-tilting assembly of a smaller overall size, a better structural stability and also an adaptability to a lid body assembly of a small size, facilitating miniaturization of products; currently, since more people live alone and there is an increasing demand for single-person and small volume liquid heating containers, the lid body assembly provided by the present embodiment addresses difficulties of the anti-tilting kettle lids of small-volume liquid heating containers in the relevant art, and can be applied in anti-tilting kettle lids of different sizes.

In addition, the lid body assembly provided by the above-described embodiment of the present application can further have the following additional technical features:
In some embodiments, the cross-sectional area of the pressure releasing tube is smaller than the cross-sectional area of the vapor passage. With such arrangement, as the diameter of the pressure releasing tube is relatively small, it is difficult for water to enter and therefore it is less easy to block. Even if tilting causes sloshing of water inside the container body and the vapor inlet is blocked by rushing and splashing water, vapor inside the kettle can be released rapidly via the pressure releasing tube, which accelerates the restoration of the balance of between the interior pressure and the exterior pressure of the container body. Further, even if a small quantity of water enters the pressure releasing tube of a small diameter, it will be ejected rapidly because of the difference between the internal pressure and the external pressure of the container body, and the pressure releasing tube is maintained unblocked. In some embodiments, the pressure releasing tube is formed at the lower lid and extends upwards, and the lower end of the pressure releasing tube is located in the vapor inlet. With such arrangement wherein the pressure releasing tube is formed at the lower lid, the internal structure of the anti-tilting assembly can be simplified, which facilitates the processing and manufacturing of products.

In some embodiments, the pressure releasing tube is formed at the anti-tilting assembly and extends downwards, and the lower end of the pressure releasing tube is located in the vapor inlet. With such arrangement wherein the pressure releasing tube is formed at the anti-tilting assembly, the structure of the lower lid can be simplified so that the pressure releasing tube is integrated at the anti-tilting assembly and, so long as after being assembled, extends downwards into the vapor inlet.

In some embodiments, the pressure releasing tube and the vapor passage are arranged side by side; or, the pressure releasing tube is arranged inside the vapor passage.

In the embodiments, the pressure releasing tube can be arranged outside the vapor passage and side by side with the vapor passage, so that the pressure releasing tube and the vapor passage are separate structures which are easy to process and manufacture; or, the pressure releasing tube is arranged inside the vapor passage, which forms an integral structure and can reduce the space occupied by the pressure releasing tube and the vapor passage, integrating the structures of the pressure releasing tube and the vapor passage in a circular tube makes the size of the entire anti-tilting assembly smaller and saves space inside the kettle lid.

In some embodiments, the pressure releasing tube is located inside the vapor passage on the side close to an outer edge of the lower lid. With such arrangement, even if tilting leads to sloshing of water inside the container body and occasionally a small quantity of water rushes towards the vapor inlet and the pressure releasing tube in an upper position due to the pressure and sloshing, at this moment, since the pressure releasing tube in an upper position is at the highest position and higher than the vapor inlet, it will be easier for vapour inside the container body to tend to be discharged via the pressure releasing tube, which accelerates the restoration of the balance of between the interior pressure and the exterior pressure of the container body. The position arrangement of the vapor inlet and the pressure releasing tube further effectively achieves the separation of vapor from water, prevents the danger of massive eruption of a mixture of water and vapor due to a high pressure inside the container body, and reduces eruption of high temperature water vapor when the liquid heating container is in a hot state and under the effect of the vapor pressure.

In some embodiments, on an upper surface of the lower lid is provided a plug connection part that protrudes upwards and is connected with the lower end of the anti-tilting assembly by plugging so that the anti-tilting assembly is connected with the lower lid. With such arrangement, the connection structure between the lower lid and the anti-tilting assembly is simplified. To achieve the assemblage between the two, one only needs to connect the lower end of the anti-assembly with the plug connection part of the lower lid by plugging, which facilitates the assembly and disassembly between the lower lid and the anti-tilting assembly and subsequent operations on the lid body assembly by a user, such as detaching and cleaning.

In some embodiments, the plug connection part is a connecting sleeve formed at the periphery of the vapor inlet, and the lower end of the anti-tilting assembly is formed with a tubular part which extends downwards and is sleeved with the connecting sleeve to form the vapor passage.

In the embodiments, the plug connection part is the connecting sleeve which is arranged around the periphery of the vapor inlet and forms the inner wall of the vapor passage for the vapor to pass, so that the connecting sleeve has at the same time two functions of assemblage and vapor passage, which saves a piece and simplifies the structure of the lower lid; specifically, the tubular part is sleeved around the exterior of the connecting sleeve to achieve the connection between the lower lid and the anti-tilting assembly, and the inside of the connecting sleeve lets vapor pass through and forms the inner wall of the vapor passage.

In some embodiments, a top wall of the pressure releasing tube is higher than a top wall of the connecting sleeve, and the upper end of the pressure releasing tube extends out of the connecting sleeve; the anti-tilting assembly further comprises a positioning sleeve formed in the vapor passage and a lower end of the positioning sleeve is sleeve-connected with the upper end of the pressure releasing tube.

In the embodiments, by providing the top wall of the pressure releasing tube higher than the top wall of the connecting sleeve, the top end of the pressure releasing tube is prevented from being submerged by the water entering via the vapor inlet, so that the pressure releasing passage is clearer and more unblocked and the gas pressure inside and outside the kettle achieves a balance rapidly; further, by the sleeve-connection between the positioning sleeve and the pressure releasing tube, together with the plug cooperation between the plug connection part and the lower end of the anti-tilting assembly, assembly between the lower lid and the anti-tilting assembly is realized, so that the assembly between the lower lid and the anti-tilting assembly is more stable and hard to rotate, and to achieve the assemblage between the two, one only needs to connect the anti-tilting assembly with the lower lid by plugging, which facilitates subsequent operations on the lid body assembly by a user, such as detaching and cleaning.

In some embodiments, the anti-tilting assembly comprises: an anti-tilting assembly base and an anti-tilting assembly lid that engage with each other in a snap-fit manner to enclose and form a hollow chamber, the interior of which is divided into a vapor chamber, a pressure releasing chamber and a sealing member moving chamber, with the vapor chamber in communication with the vapor passage, the pressure releasing chamber in communication with the upper end of the pressure releasing tube, the mobile sealing member arranged inside the sealing member moving chamber, the vapor chamber separated from the pressure releasing chamber, the vapor chamber in direct communication with the sealing member moving chamber, the pressure releasing chamber in direct communication with the sealing member moving chamber, the upper gas outlet arranged on a top wall of the anti-tilting assembly lid and in communication with the sealing member moving chamber.

In the embodiments, by providing the vapor chamber in communication with the vapor passage, the pressure releasing chamber in communication with the upper end of the pressure releasing tube, and making the vapor chamber separated from the pressure releasing chamber, separate vapor flowing paths are thus reserved respectively for the pressure releasing tube and the vapor passage, the danger of an excessive interior pressure caused by all vapor outlet paths of the lid body assembly blocked is further prevented. Specifically, the vapor chamber is in direct communication with the sealing member moving chamber, the pressure releasing chamber is in direct communication with the sealing member moving chamber, the upper gas outlet is arranged on the top wall of the anti-tilting assembly lid and in communication with the sealing member moving chamber, vapor in the vapor passage can flow out via the vapor chamber, the sealing member moving chamber and the upper gas outlet, and vapor in the pressure releasing tube can flow out via the pressure releasing chamber, the sealing member moving chamber and the upper gas outlet, ensuring the independence of the two gas paths.

In some embodiments, the sealing member moving chamber further comprises a first end and a second end opposite to each other along a length direction, with the first end close to the outer edge of the lower lid, the second end away from the outer edge of the lower lid, the upper gas outlet located right above the first end, the mobile sealing member capable of blocking the upper gas outlet when located at the first end; a chamber bottom wall of the sealing member moving chamber is arranged to descend from the first end to the second end along a height direction of the lid body assembly.

In the embodiments, when the liquid heating container is in a tilted state, the mobile sealing member in a lower position will move inside the sealing member moving chamber towards approaching the outer edge of the lid body assembly, thus by providing the first end of the sealing member moving chamber close to the outer edge of the lower lid, the second end away from the outer edge of the lower lid and the upper gas outlet right above the first end, blocking the upper gas outlet by the mobile sealing member when the liquid heating container tilts is further facilitated to prevent liquid from flowing out. Further, the chamber bottom wall of the sealing member moving chamber is arranged to descend from the first end to the second end along a height direction of the lid body assembly, in other words, when the lid body assembly is in an upright positioning state, the first end of the chamber bottom wall of the sealing member moving chamber is higher than the second end so that the mobile sealing member will stay at the second end, preventing the mobile sealing member from blocking the upper gas outlet.

In some embodiments, the anti-tilting assembly lid comprises a lid top wall and a lid side wall surrounding the lid top wall and extending downwards from the lid top wall, and a lower surface of the lid top wall is provided with a guiding rib capable of guiding the movement of the mobile sealing member inside the sealing member moving chamber. With such arrangement, with the lid side wall sleeved around the exterior of the anti-tilting assembly base, the lower surface of the lid top wall is pressed against the top wall of the anti-tilting assembly base, so as to achieve the connection between the anti-tilting assembly base and the anti-tilting assembly lid; further, the lid top wall is provided with the guiding rib capable of guiding the movement of the mobile sealing member inside the sealing member moving chamber, and, in the event that the liquid heating container is tilted, of making the mobile sealing member to be accurately aligned with the upper gas outlet, which achieves rapid sealing of the upper gas outlet and reduces spilling of liquid.

In some embodiments, a gas guiding passage is provided between the middle lid and the lower lid, and a vapor outlet in communication with the outside is provided at a side wall of the middle lid or of the lower lid, and ends of the gas guiding passage are in communication respectively with the upper gas outlet of the anti-tilting assembly and the vapor outlet.

In the embodiments, by providing that the anti-tilting assembly and the lower lid, the middle lid form the gas guiding passage and by providing the vapor outlet at the middle lid or the lower lid, vapor discharged out of the upper gas outlet of the anti-tilting assembly can flow to the vapor outlet directly via the gas guiding passage, so that vapor can rapidly reach the vapor outlet and then be discharged out of the lid body assembly via the vapor outlet, which reduces the time between boiling and tripping and turning off of a power switch, and at the same time, reduces contact area of vapor condensation and reduces generating of condensed water inside the kettle lid.

In some embodiments, there are two anti-titling assemblies comprising a first anti-tilting assembly and a second anti-tilting assembly; the gas guiding passage is of a Y-shaped general form, the three ends of which are in communication respectively with the upper gas outlet of the first anti-tilting assembly, the upper gas outlet of the second anti-tilting assembly and the vapor outlet.

In the embodiments, by providing two anti-tilting assemblies, not only can at least one anti-tilting assembly be in communication with the interior of the container body when the liquid heating container is in a tilted state, to achieve the discharge of vapor and prevent the danger due to an excessive interior pressure, but also the number of anti-tilting assemblies is reduced as much as possible, to prevent waste due to the structure of products being too complicated. Specifically, with the gas guiding passage of a Y-shaped general form, the three ends of which are in communication respectively with the upper gas outlet of the first anti-tilting assembly, the upper gas outlet of the second anti-tilting assembly and the vapor outlet, flowing path of vapor is shortened as much as possible, to make the vapor discharged as quickly as possible.

In some embodiments, on an upper surface of a top wall of the anti-tilting assembly is provided a gas nozzle protruding upwards and arranged as surrounding the periphery of the upper gas outlet, the gas nozzle being located in the gas guiding passage. With such arrangement, the communication between the gas outlet of the anti-tilting assembly and the gas guiding passage is closer, and vapor, after flowing out of the gas outlet, can directly enter the gas guiding passage, which prevents the vapor from flowing out.

According to the second aspect of the present invention, a liquid heating container is provided and comprises: a container body, a top of which is provided with an opening; and, a lid body assembly according to any one of the above-described technical solutions, which is arranged to cover the opening.

As the liquid heating container provided by the embodiments of the present aspect has the lid body assembly according to any one of the above-described technical solutions, the liquid heating container has the advantageous effects of any one of the above-described technical solutions, which are not repeated here one by one.

In some embodiments, the liquid heating container further comprises a water pouring opening and a handle arranged opposite to each other, and a condensing passage is arranged inside the handle and in communication with the vapor passage. With such arrangement, vapor in the vapor passages can flow into the condensing passage of the handle and be condensed into water drops there and then be discharged.

In some embodiments, there are two anti-tilting assemblies which are arranged symmetrically along a connecting line between the water pouring opening and the handle, and the pressure releasing tube of any one of the anti-tilting assemblies is located at the end of the vapor inlet away from the handle.

In the embodiments, as the handle will serve as a supporting point when the liquid heating container is tilted, by arranging two anti-tilting assemblies symmetrically along the connecting line between the water pouring opening and the handle, under the effect of gravity, the mobile sealing member in the anti-tilting assembly in a lower position is capable of being located in a position of blocking the upper gas outlet to prevent water from spilling out, no matter which side the liquid heating container is tilted towards; while the mobile sealing member in the anti-tilting assembly in an upper position is located in a position of letting the upper gas outlet pass vapor through, so that the anti-tilting assembly in an upper position is maintained unblocked to let vapour pass, to ensure that vapor can flow out via the vapor inlet and the pressure releasing tube, prevent the danger of an excessive pressure due to vapor inside the container body unable to be discharged and thus meets the needs of the liquid heating container in an anti-tilting state.

Other aspects and/or advantages of the general idea of the present invention will in part be described in the following description, and in part become apparent from the description or can be known by implementing the general idea of the present invention.

### Description of the Drawings

The above-mentioned and other objectives and features of the present invention will become more apparent from the following description of the embodiments in conjunction with the accompanying drawings, in which:
Fig. 1 is a schematic structural view of a lid body assembly provided according to an embodiment of the present invention when it is in an upside-down state;
Fig. 2 is a schematic structural view of part of the structure of a lid body assembly provided according to an embodiment of the present invention when it is in an upright state;
Fig. 3 is an exploded schematic view of an anti-tilting assembly of a lid body assembly provided according to an embodiment of the present invention;
Fig. 4 is another exploded schematic view of an anti-tilting assembly of a lid body assembly provided according to an embodiment of the present invention;
Fig. 5 is a disassembled schematic structural view of a lower lid and an anti-tilting assembly provided according to an embodiment of the present invention;
Fig. 6 is another disassembled schematic structural view of a lower lid and an anti-tilting assembly provided according to an embodiment of the present invention;
Fig. 7 is a schematic top view of a lid body assembly provided according to an embodiment of the present invention;
Fig. 8 is a sectional view taken along A-A in Fig. 7;
Fig. 9 is another schematic top view of a lid body assembly provided according to an embodiment of the present invention;
Fig. 10 is a sectional view taken along B-B in Fig. 9;
Fig. 11 is an exploded schematic view of an anti-tilting assembly provided according to another embodiment of the present invention;
Fig. 12 is a schematic sectional structural view of an anti-tilting assembly provided according to another embodiment of the present invention;
Fig. 13 is an exploded view of part of the structure of a lid body assembly provided according to an embodiment of the present invention;
Fig. 14 is a schematic front view of a lid body assembly provided according to an embodiment of the present invention;
Fig. 15 is a sectional view taken along C-C of Fig. 14;
Fig. 16 is another exploded view of part of the structure of a lid body assembly provided according to an embodiment of the present invention;
Fig. 17 is a schematic structural view of a middle lid provided according to an embodiment of the present invention when it is in an upside-down state;
Fig. 18 is an exploded view of a lid body assembly provided according to an embodiment of the present invention;
Fig. 19 is a schematic structural view of a liquid heating container provided according to an embodiment of the present invention when it is in a tilted state, with the middle lid removed;
Fig. 20 is a schematic view of the internal structure of an anti-tilting assembly of a liquid heating container provided according to an embodiment of the present invention when it is in a tilted state;
Fig. 21 is a schematic structural view of a liquid heating container provided according to an embodiment of the present invention when it is in a titled state.

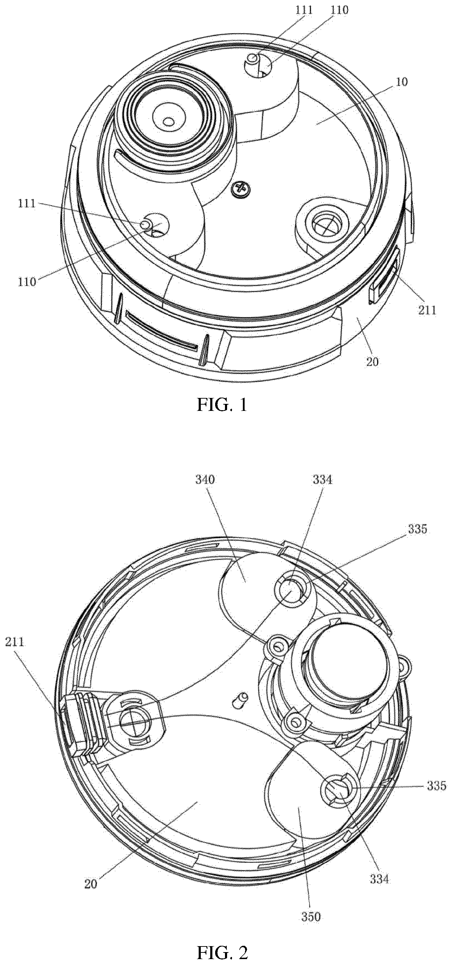

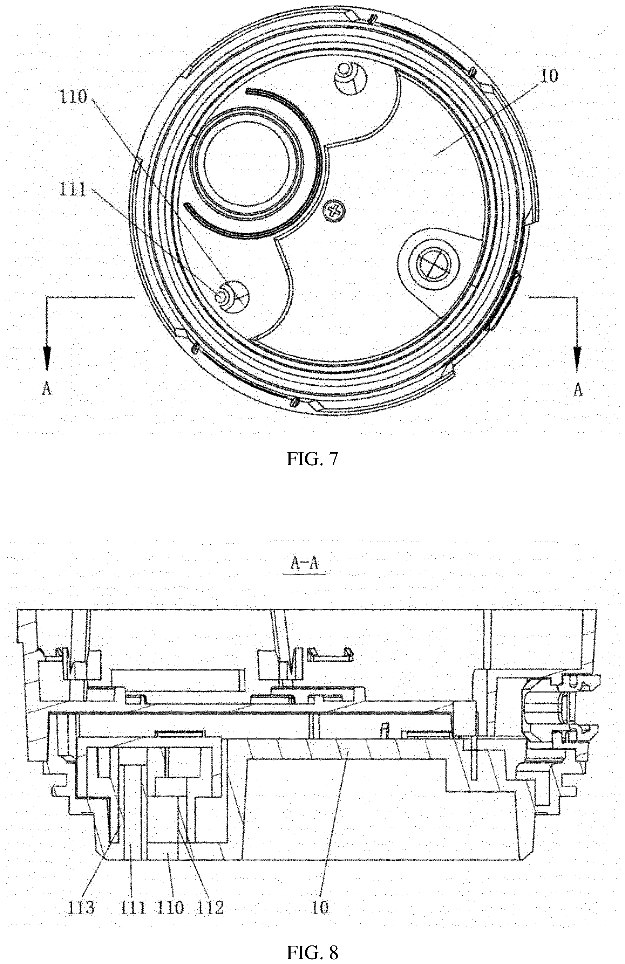

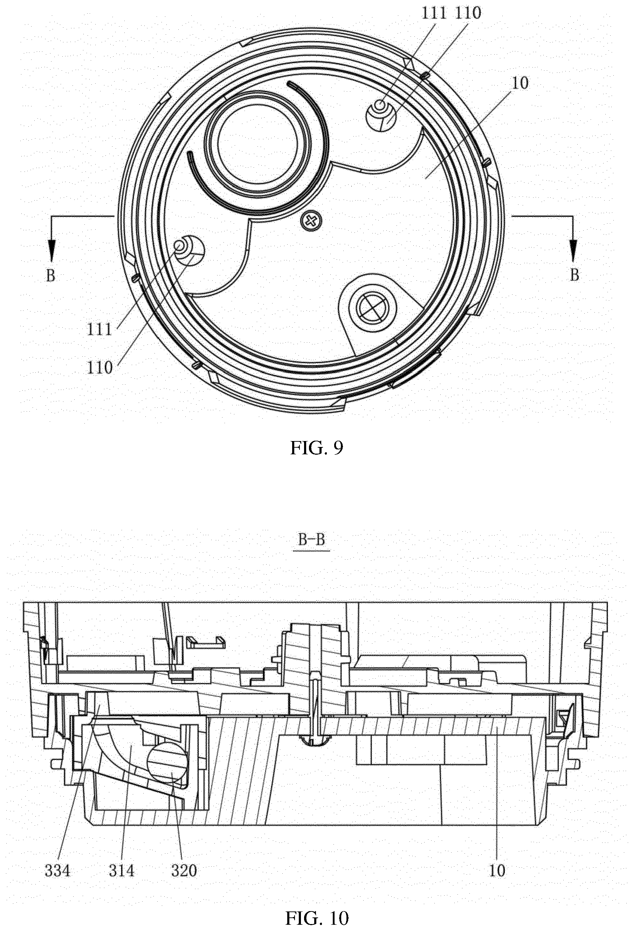

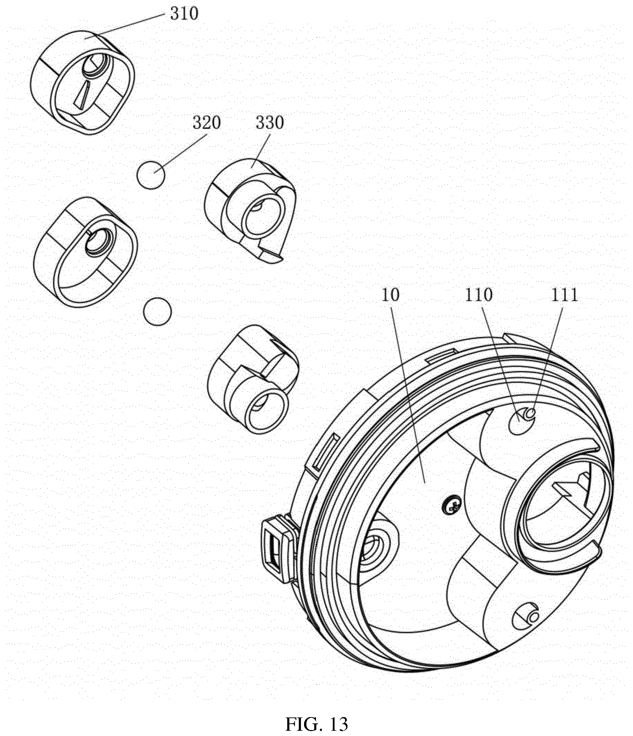

Below is description of the reference signs in Figs. 1 to 21:
10 lower lid, 110 vapor inlet, 111 pressure releasing opening, 112 connecting sleeve, 113 pressure releasing tube,
20 middle lid, 210 gas guiding passage, 211 vapor outlet,
30 anti-titling assembly, 310 anti-tilting assembly base, 311 base body, 312 vapor chamber, 313 pressure releasing chamber, 314 sealing member moving chamber, 315 tubular part, 316 positioning sleeve,
320 mobile sealing member, 330 anti-tilting assembly lid, 331 lid top wall, 332 lid side wall, 333 guiding rib, 334 upper gas outlet, 335 gas nozzle,
340 first anti-tilting assembly, 350 second anti-tilting assembly,
40 upper lid,
50 container body, 510 water pouring opening, 520 handle, 530 sealing ring.

### Embodiments of the Invention

The following detailed description is provided to assist readers in gaining a comprehensive understanding of the methods, devices and/or systems described herein. However, various changes, modifications and equivalents of the methods, devices and/or systems described herein will be clear after understanding the disclosure of the present application. For example, the orders of operations described herein are examples only and not limiting, and instead, except for operations that must occur in a particular order, can be changed as will be clear upon understanding the disclosure of the present application. Furthermore, description of features known in the art may be omitted for the sake of clarity and brevity.

The features described herein may be implemented in different forms and should not be interpreted as limited to the examples described herein. Rather, the examples described herein have been provided to illustrate only a few of the many possible ways of implementing the methods, devices and/or systems described herein, which many possible ways would be apparent after understanding the disclosure of the present application.

As used herein, the term "and/or" includes any one and any combination of any two or more of the associated listed items.

Although terms such as "first", "second" and "third" may be used herein to describe various elements, components, regions, layers or parts, these elements, components, regions, layers or parts should not be limited by these terms. Rather, these terms are only used to distinguish an element, component, region, layer or part from another element, component, region, layer or part. Thus, so-called first element, first component, first region, first layer or first part in the examples described herein could also be called second element, second component, second region, second layer or second part, without departing from the teachings of the examples.

In the description, when an element such as a layer, region or substrate is described as being "on", "connected to" or "coupled to" another element, the element can be directly "on" the another element, "connected to" or "coupled to" the another element directly, or with the possible presence of one or more other elements intervening therebetween. In contrast, when an element is described as being "directly on", "directly connected to" or "directly coupled to" another element, there may be no other elements intervening therebetween.

The terms used herein are used to describe various examples only and are not to be used to limit the disclosure. Singular forms are also intended to include plural forms unless the context clearly dictates otherwise. The terms "comprise", "include" and "have" describe the presence of the recited features, quantities, operations, components, elements and/or combinations thereof, but do not exclude the presence or addition of one or more other features, quantities, operations, components, elements and/or combinations thereof. The term "a plurality of" refers to any number of two and more.

The definitions of position terms such as "upper", "lower", "top" and "bottom" in the present application are all based on position definitions when a liquid heating container is in a normal state of use and is placed upright.

Unless otherwise defined, all terms including technical and scientific terms used herein have the same meanings as commonly understood by one of ordinary skills in the art which the present invention involves after understanding the present invention. Unless explicitly so defined herein, terms such as those defined in general-purpose dictionaries should be interpreted to have meanings consistent with their meanings in the context of the relevant art and in the present invention, and should not be idealized or overly formalized interpreted.

In addition, in the description of examples, when it is considered that a detailed description of a well-known relevant structure or function would obscure the explanation of the present invention, such detailed description will be omitted.

The lid body assembly and liquid heating container of some embodiments of the present application will be described below in conjunction with Figs. 1 to 21.

As shown in Figs. 1 to 6, according to a first aspect of the present invention, a lid body assembly is provided and used for covering an opening at the top of a container body 50 of a liquid heating container, the lid body assembly comprising: a lower lid 10 provided with at least two vapor inlets 110 that pass through the lower lid 10; a middle lid 20 connected above the lower lid 10 and, together with the lower lid 10, enclosing an accommodating chamber; an anti-tilting assembly 30 arranged in the accommodating chamber and comprising a lower gas inlet, an upper gas outlet 334 and a vapor passage putting the lower gas inlet and the upper gas outlet 334 in communication, the lower gas inlet of each anti-tilting assembly 30 in communication with one vapor inlet 110, the anti-tilting assembly 30 further comprising a mobile sealing member 320 capable of moving inside the anti-tilting assembly 30 so as to block or open the upper gas outlet 334; a pressure releasing tube 113 extending in a direction of the height of the vapor passage and having a lower end capable of being in communication with the container body 50 and an upper end in communication with the upper gas outlet 334; when the liquid heating container is in a tilted state, the mobile sealing member 320 in the anti-tilting assembly 30 in a lower position is capable of blocking the upper gas outlet 334 in a lower position, while the mobile sealing member 320 in the anti-tilting assembly 30 in an upper position is capable of opening the upper gas outlet 334 in an upper position.

The lid body assembly proposed by the embodiment of the present aspect comprises the lower lid 10, the middle lid 20 and at least two of the anti-tilting assembly 30, which anti-tilting assembly 30 comprises the upper gas outlet 334, the lower gas inlet in communication with the vapor inlet 110 and the mobile sealing member 320 capable of moving to a position of blocking the upper gas outlet 334 so that a sealed space is formed inside the blocked anti-tilting assembly 30 and thus the passageway of the vapor inlet 110 on the lower lid 10 is blocked by means of the anti-tilting assembly 30, for the purpose of preventing water from spilling out of the vapor inlet 110 when the liquid heating container is tilted. The pressure releasing tube 113 is provided in the anti-tilting assembly 30. When the liquid heating container is in an upright state, vapor inside the container body 50 can enter the anti-tilting assembly via the vapor passage and the pressure releasing tube 113 respectively and then be discharged via the upper gas outlet 334; when the liquid heating container is in a tilted state, the mobile sealing member 320 in the anti-tilting assembly 30 in a lower position is capable of blocking the upper gas outlet 334 in a lower position, preventing water from spilling out, while the mobile sealing member 320 in the anti-tilting assembly 30 in an upper position is capable of opening the upper gas outlet 334 in an upper position, so that the anti-tilting assembly 30 in an upper position remains pass-through, ensuring that vapor is capable of flowing out via the vapor passage and the pressure releasing tube 113 to prevent the danger of an excessive pressure inside the container body 50 due to vapor unable to be discharged. Further, by providing two passageways via the pressure releasing tube 113 and via the vapor passage for discharging vapor, even if tilting leads to sloshing of water inside the container body 50 and occasionally a small quantity of water rushes towards the vapor passage and the pressure releasing tube 113 in an upper position due to the pressure and sloshing, as the vapor passage and the pressure releasing tube 113 are two passageways not in communication with each other, pressure can still be released, even if one passageway among the two is blocked, via the other passageway, which allows vapor inside the container body to be more easily released and accelerates the restoration of the balance between the interior pressure and the exterior pressure of the container body 50. The design of the vapor passage and the pressure releasing tube 113 effectively achieves the separation of vapor from water, prevents the danger of massive eruption of a mixture of water and vapor due to a high pressure inside the container body 50, and reduces eruption of high temperature water vapor when the liquid heating container is in a hot state and under the effect of the vapor pressure.

Further, compared with venting tubes transversally arranged on a kettle lid in the relevant art, the technical solution of the present application, by integrating the pressure releasing tube 113 and the vapor passage in a circular tube, saves internal space of the anti-tilting assembly 30 and simplifies the gas guiding structure, resulting in the anti-tilting assembly 30 of a smaller overall size, a better structural stability and also an adaptability to a lid body assembly of a small size, facilitating miniaturization of products; currently, since more people live alone and there is an increasing demand for single-person and small volume liquid heating containers, the lid body assembly provided by the present embodiment addresses difficulties of the anti-tilting kettle lids of small-volume liquid heating containers in the relevant art, and can be applied in anti-tilting kettle lids of different sizes.

As shown in Figs. 1, 2 and 5 to 10, it can be understood that there is necessarily a pressure releasing opening 111 inside the pressure releasing tube 113 for the vapour to pass.

In an anti-tilting kettle lid in the relevant art, an anti-titling function is achieved by two venting passages arranged transversally in the kettle lid, which has a relatively complex structure for sealing and releasing pressure. Arranging structures like the mobile sealing member 320 inside a passageway requires a certain length of the passageway, which results in a relatively long passage inside the kettle lid, that occupies a large surface of the kettle lid and is impossible to use in many kettle lids of relatively small sizes. In addition, as water tension and the size of water drops formed are fixed and cannot change, the inner diameter of a venting passageway cannot be scaled down, otherwise, it will lead to blocking of vapor by a water film of condensed water, which causes dysfunction of passing vapor and safety risks. Therefore, venting passageways in the relevant art cannot be directly scaled down to be arranged at a lid body assembly of a small size. The lid body assembly provided by the present application integrates the structures of the pressure releasing tube 113 and the vapor passage into a circular tube shape, without changing the diameter of the vapor passage and without changing the size of the mobile sealing member 320, which saves the internal space of the sealed structure, simplifies the vapor guiding structure, enables the anti-tilting assembly 30 to adapt to smaller lid body assemblies, and improves adaptability of products.

In some embodiments, the cross-sectional area of the pressure releasing tube 113 is smaller than the cross-sectional area of the vapor passage. With such arrangement, as the diameter of the pressure releasing tube 113 is relatively small, it is difficult for water to enter and therefore it is less easy to block. Even if tilting causes sloshing of water inside the container body and the vapor inlet 110 is blocked by rushing and splashing water, vapor inside the kettle can be released rapidly via the pressure releasing tube 113, which accelerates the restoration of the balance of between the interior pressure and the exterior pressure of the container body 50. Further, even if a small quantity of water enters the pressure releasing tube 113 of a small diameter, it will be ejected rapidly because of the difference between the internal pressure and the external pressure of the container body 50, and the pressure releasing tube 113 is maintained unblocked.

Further, regarding the specific arrangement of the pressure releasing tube 113, in some embodiments, as shown in Fig. 1, 2 and 5 to 10, the pressure releasing tube 113 is formed at the lower lid 10 and extends upwards, and the lower end of the pressure releasing tube 113 is located in the vapor inlet 110. With such arrangement wherein the pressure releasing tube 113 is formed at the lower lid 10, the internal structure of the anti-tilting assembly 30 can be simplified, which facilitates the processing and manufacturing of products. Specifically, the vapor inlet 110 is a circular hole, the pressure releasing tube 113 is a hollow circular cylinder, and is arranged inside the circular hole on the side close to an outer edge of the lower lid 10 and directly connected with the inner wall of the circular hole. Or, the pressure releasing tube 113 can be connected indirectly with the inner wall of the circular hole by means of a structure such as a connecting rib.

In some other embodiments, the pressure releasing tube 113 is formed at the anti-tilting assembly 30 and extends downwards, and the lower end of the pressure releasing tube 113 is located in the vapor inlet 110. With such arrangement wherein the pressure releasing tube 113 is formed at the anti-tilting assembly 30, the structure of the lower lid 10 can be simplified so that the pressure releasing tube 113 is integrated at the anti-tilting assembly 30 and, so long as after being assembled, extends downwards into the vapor inlet 110.

In some embodiments, the pressure releasing tube 113 and the vapor passage are arranged side by side; or, the pressure releasing tube 113 is arranged inside the vapor passage.

In the embodiments, the pressure releasing tube 113 can be arranged outside the vapor passage and side by side with the vapor passage, so that the pressure releasing tube 113 and the vapor passage are separate structures which are easy to process and manufacture; or, the pressure releasing tube 113 is arranged inside the vapor passage, which forms an integral structure and can reduce the space occupied by the pressure releasing tube 113 and the vapor passage, integrating the structures of the pressure releasing tube 113 and the vapor passage in a circular tube makes the size of the entire anti-tilting assembly 30 smaller and saves space inside the kettle lid.

In some embodiments, the pressure releasing tube 113 is located inside the vapor passage on the side close to an outer edge of the lower lid 10. With such arrangement, even if tilting leads to sloshing of water inside the container body 50 and occasionally a small quantity of water rushes towards the vapor inlet 110 and the pressure releasing tube 113 in an upper position due to the pressure and sloshing, at this moment, since the pressure releasing tube 113 in an upper position is at the highest position and higher than the vapor inlet 110, it will be easier for the vapour to tend to be discharged via the pressure releasing tube 113, which accelerates the restoration of the balance between the interior pressure and the exterior pressure of the container body 50. The position arrangement of the vapor inlet 110 and the pressure releasing tube 113 further effectively achieves the separation of vapor from water, prevents the danger of massive eruption of a mixture of water and vapor due to a high pressure inside the container body 50, and reduces eruption of high temperature water vapor when the liquid heating container is in a hot state and under the effect of the vapor pressure.

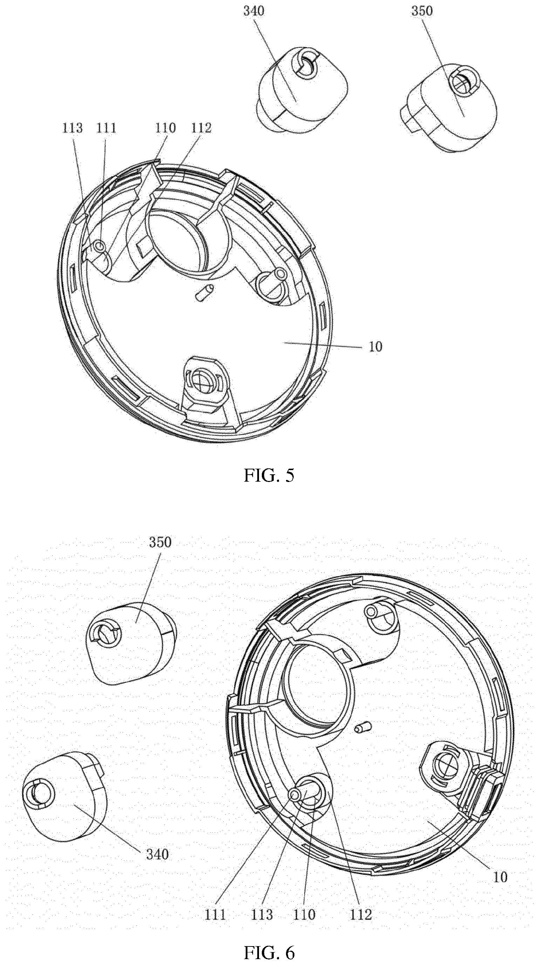

Regarding the connection between the lower lid 10 and the anti-tilting assembly 30, in some embodiments, as shown in Figs. 5 and 6, on an upper surface of the lower lid 10 is provided a plug connection part that protrudes upwards and is connected with the lower end of the anti-tilting assembly 30 by plugging so that the anti-tilting assembly 30 is connected with the lower lid 10. With such arrangement, the connection structure between the lower lid 10 and the anti-tilting assembly 30 is simplified. To achieve the assemblage between the two, one only needs to connect the lower end of the anti-assembly 30 with the plug connection part of the lower lid 10 by plugging, which facilitates the assembly and disassembly between the lower lid 10 and the anti-tilting assembly 30 and subsequent operations on the lid body assembly by a user, such as detaching and cleaning.

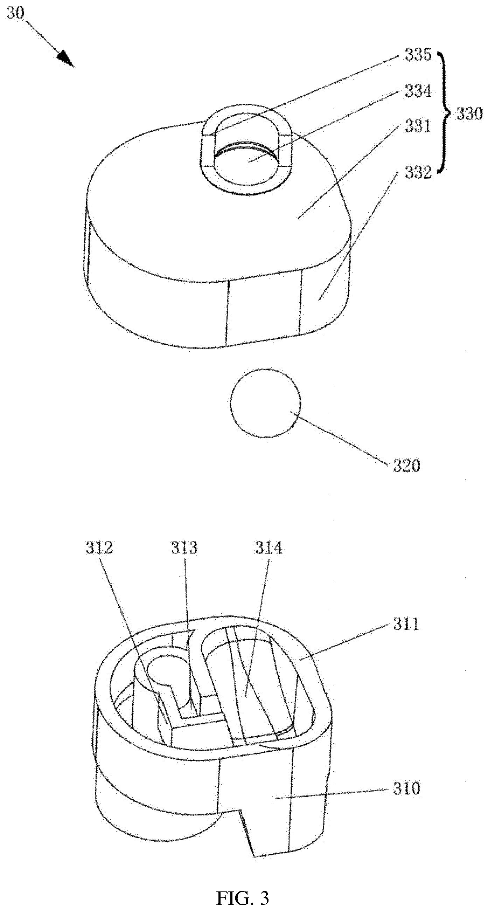

Further, to simplify product structure, as shown in Figs. 3, 4, 5 and 6, in some embodiments, the plug connection part is a connecting sleeve 112 formed at the periphery of the vapor inlet 110, and the lower end of the anti-tilting assembly 30 is formed with a tubular part 315 which extends downwards and is sleeved with the connecting sleeve 112 to form the vapor passage.

In the embodiments, the plug connection part is the connecting sleeve 112 which is arranged around the periphery of the vapor inlet 110 and forms the inner wall of the vapor passage for the vapor to pass, so that the connecting sleeve 112 has at the same time two functions of assemblage and vapor passage, which saves a piece and simplifies the structure of the lower lid 10. Specifically, the tubular part 315 is sleeved around the exterior of the connecting sleeve 112 to achieve the connection between the lower lid 10 and the anti-tilting assembly 30, and the inside of the connecting sleeve 112 lets the vapor pass through and forms the inner wall of the vapor passage.

In some embodiments, as shown in Figs. 3, 4, 5 and 6, a top wall of the pressure releasing tube 113 is higher than a top wall of the connecting sleeve 112, and the upper end of the pressure releasing tube 113 extends out of the connecting sleeve 112; the anti-tilting assembly 30 further comprises a positioning sleeve 316 formed in the vapor passage and a lower end of the positioning sleeve 316 is sleeve-connected with the upper end of the pressure releasing tube 113.

In the embodiments, by providing the top wall of the pressure releasing tube 113 higher than the top wall of the connecting sleeve 112, the top end of the pressure releasing tube 113 is prevented from being submerged by the water entering via the vapor inlet 110, so that the pressure releasing passage is clearer and more unblocked and the gas pressure inside and outside the kettle achieves a balance rapidly; further, by the sleeve-connection between the positioning sleeve 316 and the pressure releasing tube 113, together with the plug cooperation between the plug connection part and the lower end of the anti-tilting assembly 30, assembly between the lower lid 10 and the anti-tilting assembly 30 is realized, so that the assembly between the lower lid 10 and the anti-tilting assembly 30 is more stable and hard to rotate, and to achieve the assemblage between the two, one only needs to connect the anti-tilting assembly 30 with the lower lid 10 by plugging, which facilitates subsequent operations on the lid body assembly by a user, such as detaching and cleaning.

Specifically, as shown in Figs. 5 and 6, the connecting sleeve 112 is generally of a circular tube shape, the pressure releasing tube 113 is the circular tube located inside the connecting sleeve 112, and the connecting sleeve 112 and the pressure releasing tube 113 extend vertically along a direction of the height of the lid body assembly. While in use, the vapor in the inner chamber of the container body 50 can rapidly enter into the anti-tilting assembly 30 via the pressure releasing tube 113 and the connecting sleeve 112 and be discharged from the upper gas outlet 334. The vapor has a relatively short flow path in the pressure releasing tube 113, the connecting sleeve 112 and the anti-titling assembly 30 and can be rapidly discharged out of the anti-tilting assembly 30, so that the vapor does not easily form condensed water inside the pressure releasing tube 113, the connecting sleeve 112 and the anti-titling assembly 30, thus solving hygiene issues on drinking water in the relevant art caused by vapor easily forming condensed water inside a venting passage that is too long.

Regarding the specific structure of the anti-tilting assembly 30, in some embodiments, as shown in Figs. 3, 4, 11 and 12, the anti-tilting assembly 30 comprises: an anti-tilting assembly base 310 and an anti-tilting assembly lid 330 that engage with each other in a snap-fit manner to enclose and form a hollow chamber, the interior of which is divided into a vapor chamber 312, a pressure releasing chamber 313 and a sealing member moving chamber 314, with the vapor chamber 312 in communication with the vapor passage, the pressure releasing chamber 313 in communication with the upper end of the pressure releasing tube 113, the mobile sealing member 320 arranged inside the sealing member moving chamber 314, the vapor chamber 312 separated from the pressure releasing chamber 313, the vapor chamber 312 in direct communication with the sealing member moving chamber 314, the pressure releasing chamber 313 in direct communication with the sealing member moving chamber 314, the upper gas outlet 334 arranged on a top wall of the anti-tilting assembly lid 330 and in communication with the sealing member moving chamber 314.

In the embodiments, by providing the vapor chamber 312 in communication with the vapor passage, the pressure releasing chamber 313 in communication with the upper end of the pressure releasing tube 113, and making the vapor chamber 312 separated from the pressure releasing chamber 313, separate vapor flowing paths are thus reserved respectively for the pressure releasing tube 113 and the vapor passage, the danger of an excessive interior pressure caused by all vapor outlet paths of the lid body assembly blocked is further prevented. Specifically, the vapor chamber 312 is in direct communication with the sealing member moving chamber 314, the pressure releasing chamber 313 is in direct communication with the sealing member moving chamber 314, the upper gas outlet 334 is arranged on the top wall of the anti-tilting assembly lid 330 and in communication with the sealing member moving chamber 314, vapor in the vapor passage can flow out via the vapor chamber 312, the sealing member moving chamber 314 and the upper gas outlet 334, and vapor in the pressure releasing tube 113 can flow out via the pressure releasing chamber 313, the sealing member moving chamber 314 and the upper gas outlet 334, ensuring the independence of the two gas paths.

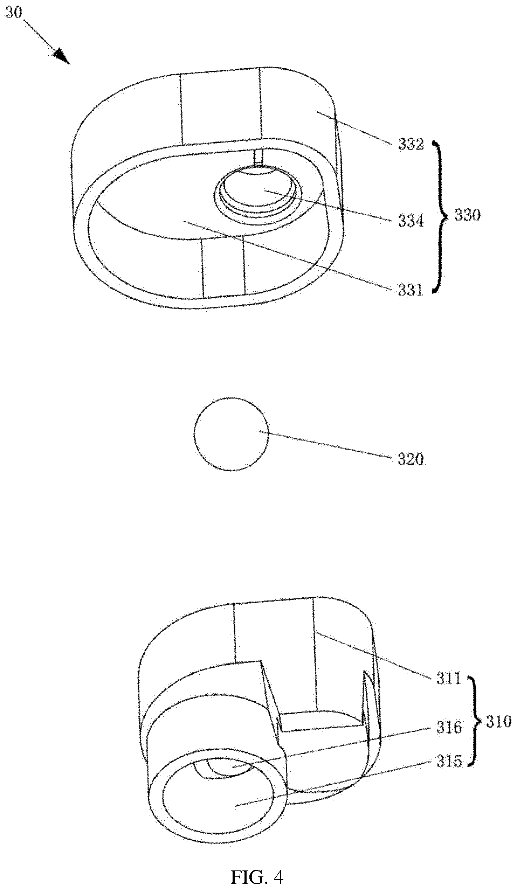

Specifically, as shown in Figs. 3 and 4, the anti-tilting assembly base 310 comprises a hollow base body 311 inside which the vapor chamber 312, the pressure releasing chamber 313 and the sealing member moving chamber 314 are all arranged, with the positioning sleeve 316 and the tubular part 315 both connected on a bottom wall of the base body 311 and extending downwards.

Specifically, on a side wall of the pressure releasing chamber 313 there is a first notch in communication with the sealing member moving chamber 314, which first notch is of a simple structure and capable of allowing vapor inside the pressure releasing chamber 313 to enter the sealing member moving chamber 314; on a side wall of the vapor chamber 312 there is a second notch in communication with the sealing member moving chamber 314, of which second notch a bottom wall is not higher than a bottom wall of the sealing member moving chamber 314. By providing the second notch, not only can vapor in the vapor chamber 312 be allowed to enter the sealing member moving chamber 314, but also water condensed in the sealing member moving chamber 314 can flow back via the second notch, preventing bacteria growing due to long-term accumulation of condensed water in the sealing member moving chamber 314.

In some embodiments, as shown in Figs. 3, 19, and 20, the sealing member moving chamber 314 further comprises a first end and a second end opposite to each other along a length direction, with the first end close to the outer edge of the lower lid 10, the second end away from the outer edge of the lower lid 10, the upper gas outlet 334 located right above the first end, the mobile sealing member 320 capable of blocking the upper gas outlet 334 when located at the first end; a chamber bottom wall of the sealing member moving chamber 314 is arranged to descend from the first end to the second end along a height direction of the lid body assembly.

In the embodiments, when the liquid heating container is in a tilted state, the mobile sealing member 320 in a lower position will move inside the sealing member moving chamber 314 towards approaching the outer edge of the lid body assembly, thus by providing the first end of the sealing member moving chamber 314 close to the outer edge of the lower lid 10, the second end away from the outer edge of the lower lid 10 and the upper gas outlet 334 right above the first end, blocking the upper gas outlet 334 by the mobile sealing member 320 when the liquid heating container tilts is further facilitated to prevent liquid from flowing out. Further, the chamber bottom wall of the sealing member moving chamber 314 is arranged to descend from the first end to the second end along a height direction of the lid body assembly, in other words, when the lid body assembly is in an upright positioning state, the first end of the chamber bottom wall of the sealing member moving chamber 314 is higher than the second end so that the mobile sealing member 320 will stay at the second end, preventing the mobile sealing member 320 from blocking the upper gas outlet 334.

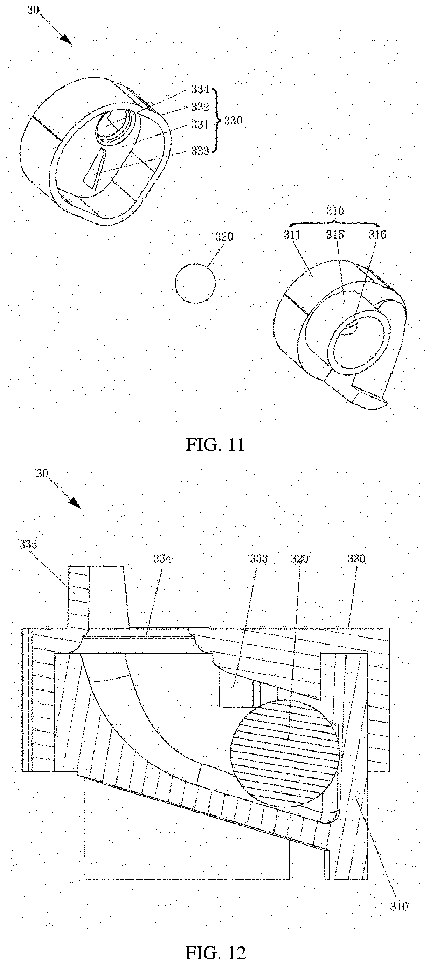

In some embodiments, as shown in Figs. 11, 12, and 13, the anti-tilting assembly lid 330 comprises a lid top wall 331 and a lid side wall 332 surrounding the lid top wall 331 and extending downwards from the lid top wall 331, and a lower surface of the lid top wall 331 is provided with a guiding rib 333 capable of guiding the movement of the mobile sealing member 320 inside the sealing member moving chamber 314. With such arrangement, with the lid side wall 332 sleeved around the exterior of the anti-tilting assembly base 310, the lower surface of the lid top wall 331 is pressed against the top wall of the anti-tilting assembly base 310, so as to achieve the connection between the anti-tilting assembly base 310 and the anti-tilting assembly lid 330; further, the lid top wall 331 is provided with the guiding rib 333 capable of guiding the movement of the mobile sealing member 320 inside the sealing member moving chamber 314, and, in the event that the liquid heating container is tilted, of making the mobile sealing member 320 to be accurately aligned with the upper gas outlet 334, which achieves rapid sealing of the upper gas outlet 334 and reduces spilling of liquid.

Specifically, the mobile sealing member 320 is a ball, which not only is of a simple structure, but also can rapidly roll in the sealing member moving chamber 314 and tightly block the upper gas outlet 334.

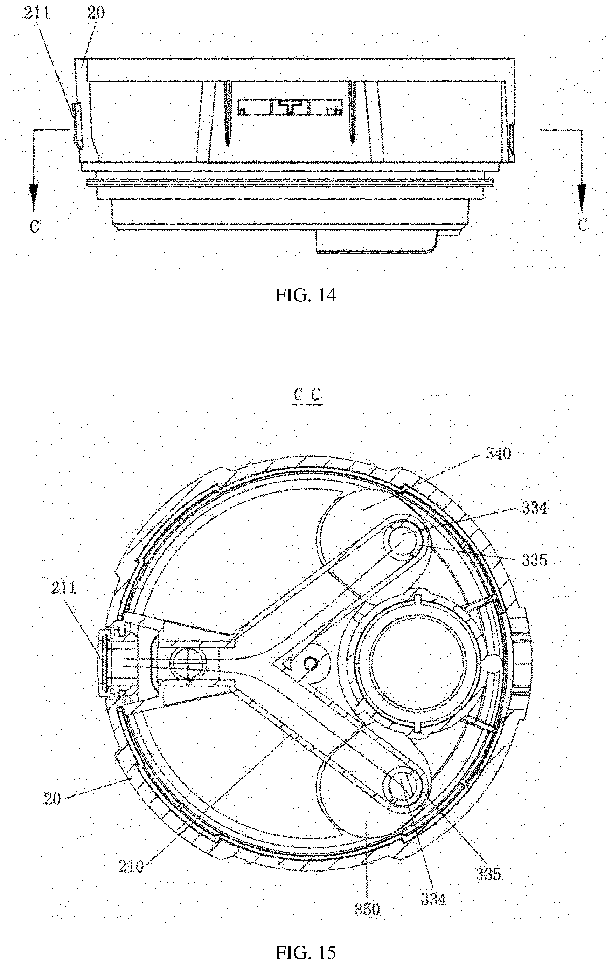

To achieve rapid venting, in some embodiments, as shown in Figs. 14, 15, 16, and 17, a gas guiding passage 210 is provided between the middle lid 20 and the lower lid 10, and a vapor outlet 211 in communication with the outside is provided at a side wall of the middle lid 20 or of the lower lid 10, and ends of the gas guiding passage 210 are in communication respectively with the upper gas outlet 334 of the anti-tilting assembly 30 and the vapor outlet 211.

In the embodiments, by providing that the anti-tilting assembly 30 and the lower lid 10, the middle lid 20 form the gas guiding passage 210 and by providing the vapor outlet 211 at the middle lid 20 or the lower lid 10, vapor discharged out of the upper gas outlet 334 of the anti-tilting assembly 30 can flow to the vapor outlet 211 directly via the gas guiding passage 210, so that vapor can rapidly reach the vapor outlet 211 and then be discharged out of the lid body assembly via the vapor outlet 211, which reduces the time between boiling and tripping and turning off of a power switch, and at the same time, reduces contact area of vapor condensation and reduces generating of condensed water inside the kettle lid.

Specifically, as shown in Figs. 14, 15, 16 and 17, the gas guiding passage 210 is arranged at a lower surface of the middle lid 20 and abuts against the upper surface of the lower lid 10, to achieve tight fitting.

In some embodiments, there are two anti-titling assemblies 30 comprising a first anti-tilting assembly 340 and a second anti-tilting assembly 350; as shown in Figs. 14, 15 and 16, the gas guiding passage 210 is of a Y-shaped general form, the three ends of which are in communication respectively with the upper gas outlet 334 of the first anti-tilting assembly 340, the upper gas outlet 334 of the second anti-tilting assembly 350 and the vapor outlet 211.

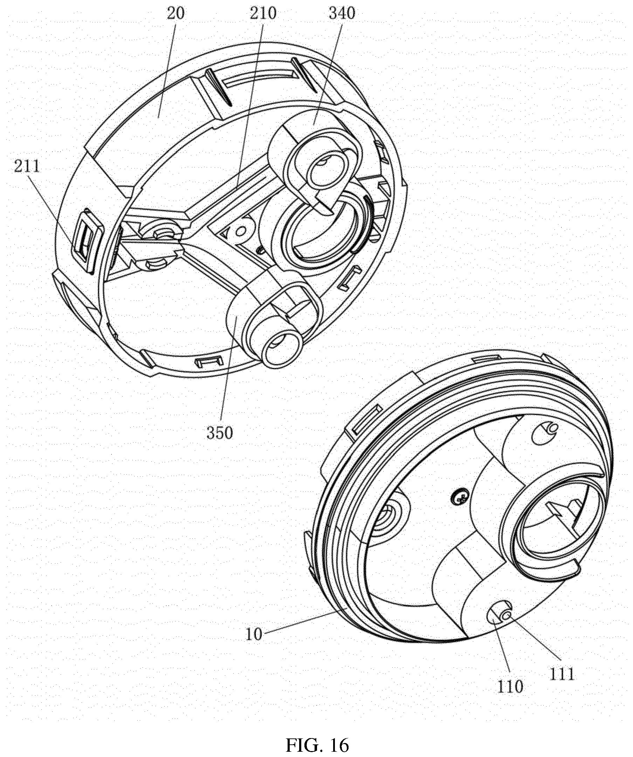

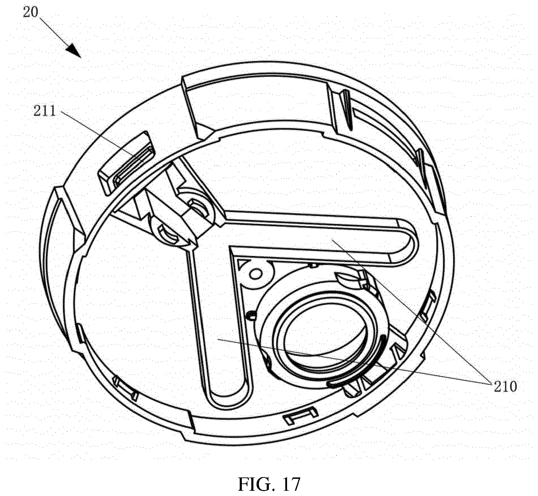

In the embodiments, by providing two anti-tilting assemblies 30, not only can at least one anti-tilting assembly 30 be in communication with the interior of the container body 50 when the liquid heating container is in a tilted state, to achieve the discharge of vapor and prevent the danger due to an excessive interior pressure, but also the number of anti-tilting assemblies is reduced as much as possible, to prevent waste due to the structure of products being too complicated. Specifically, as shown in Figs. 16 and 17, with the gas guiding passage 210 of a Y-shaped general form, the three ends of which are in communication respectively with the upper gas outlet 334 of the first anti-tilting assembly 340, the upper gas outlet 334 of the second anti-tilting assembly 350 and the vapor outlet 211, flowing path of vapor is shortened as much as possible, to make the vapor discharged as quickly as possible.

In some embodiments, as shown in Figs. 3, 12 and 15, on an upper surface of a top wall of the anti-tilting assembly 30 is provided a gas nozzle 335 protruding upwards and arranged as surrounding the periphery of the upper gas outlet 334, the gas nozzle 335 being located in the gas guiding passage 210. With such arrangement, the communication between the gas outlet of the anti-tilting assembly 30 and the gas guiding passage 210 is closer, and vapor, after flowing out of the gas outlet, can directly enter the gas guiding passage 210, which prevents the vapor from flowing out.

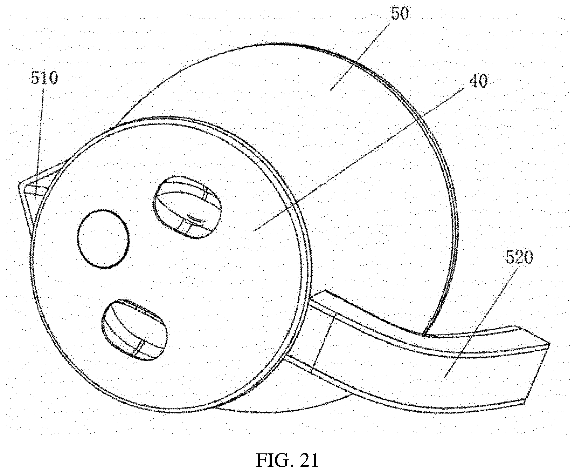

In some embodiments, as shown in Fig. 21, the lid body assembly further comprises an upper lid 40 mounted above the middle lid 20 and capable of covering the parts on the middle lid 20, so as to facilitate cleaning and aesthetic of the lid body assembly.

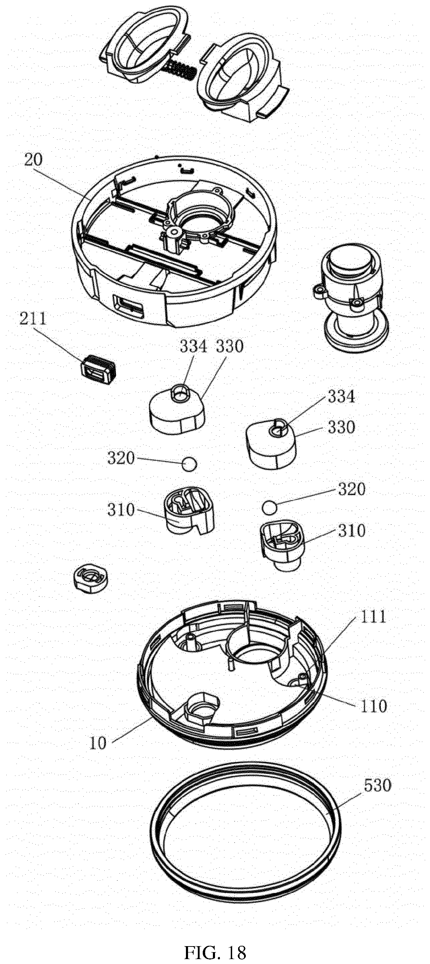

In some embodiments, as shown in Fig. 18, the lid body assembly further comprises a sealing ring 530 sleeved around the periphery of the lower lid 10 and capable of preventing water from flowing out from between the lid body assembly and the container body 50, so as to achieve a water-tight connection between the lid body assembly and the container body 50.

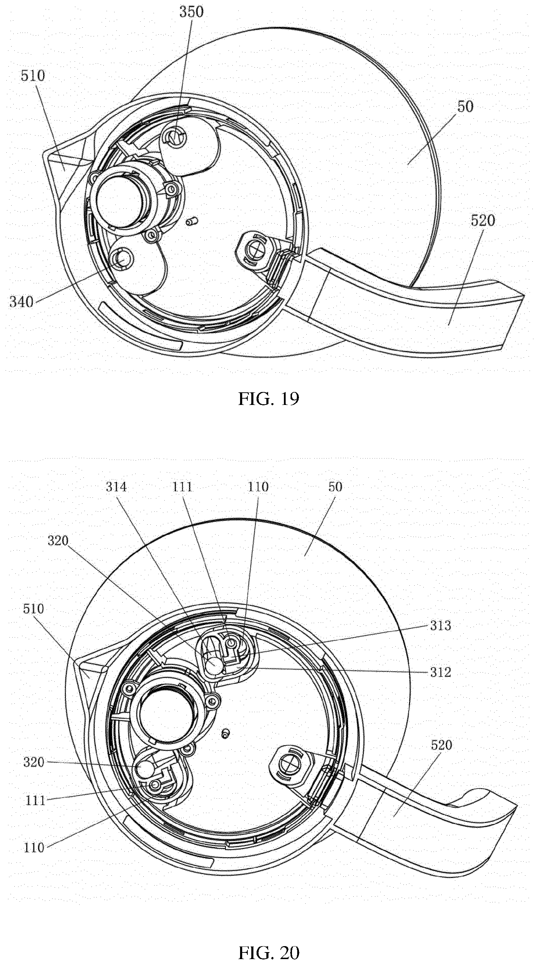

As show in Figs. 19, 20 and 21, according to a second aspect of the present invention, a liquid heating container is provided, comprising: a container body 50, a top of which is provided with an opening; and, a lid body assembly according to any one of the above-described technical solutions, which is arranged to cover the opening.

As the liquid heating container provided by the embodiments of the present aspect has the lid body assembly according to any one of the above-described technical solutions, the liquid heating container has the advantageous effects of any one of the above-described technical solutions, which are not repeated here one by one.

In some embodiments, as shown in Figs. 19, 20 and 21, the liquid heating container further comprises a water pouring opening 510 and a handle 520 arranged opposite to each other, and a condensing passage is arranged inside the handle 520 and in communication with the vapor passage. With such arrangement, vapor in the vapor passages can flow into the condensing passage of the handle 520 and be condensed into water drops there and then be discharged.

In some embodiments, there are two anti-tilting assemblies 30 which are arranged symmetrically along a connecting line between the water pouring opening 510 and the handle 520, and the pressure releasing tube 113 of any one of the anti-tilting assemblies 30 is located at the end of the vapor inlet 110 away from the handle 520.

In the embodiments, as the handle 520 will serve as a supporting point when the liquid heating container is tilted, by arranging two anti-tilting assemblies 30 symmetrically along the connecting line between the water pouring opening 510 and the handle 520, under the effect of gravity, the mobile sealing member 320 in the anti-tilting assembly 30 in a lower position is capable of being located in a position of blocking the upper gas outlet 334 to prevent water from spilling out, no matter which side the liquid heating container is tilted towards; while the mobile sealing member 320 in the anti-tilting assembly 30 in an upper position is located in a position of letting the upper gas outlet 334 pass vapor through, so that the anti-tilting assembly 30 in an upper position is maintained unblocked to let vapour pass, to ensure that vapor can flow out via the vapor inlet 110 and the pressure releasing tube 113, prevent the danger of an excessive pressure due to vapor inside the container body 50 unable to be discharged and thus meets the needs of the liquid heating container in an anti-tilting state.

Although embodiments of the present invention have been described above in detail, various modifications and variants can be made to the embodiments of the present invention by those skilled in the art without departing from the spirit and scope of the present invention. It should be understood that such modifications and variants will still fall within the spirit and scope of the embodiments of the present invention as defined by the claims, as would appear to those skilled in the art.

## Claims

1. A lid body assembly for covering an opening at the top of a container body (50) of a liquid heating container, **characterized in that**, the lid body assembly comprises:
- a lower lid (10) on which at least two vapor inlets (110) that pass through the lower lid (10) are provided;
- a middle lid (20) connected above the lower lid (10) and, together with the lower lid (10), enclosing an accommodating chamber;
- an anti-tilting assembly (30) arranged in the accommodating chamber and comprising a lower gas inlet, an upper gas outlet (334) and a vapor passage putting the lower gas inlet and the upper gas outlet (334) in communication, the lower gas inlet of each anti-tilting assembly (30) in communication with one of the vapor inlets (110), the anti-tilting assembly (30) further comprising a mobile sealing member (320) capable of moving in the anti-tilting assembly (30) so as to block or open the upper gas outlet (334);
- a pressure releasing tube (113) extending in a direction of the height of the vapor passage and having a lower end capable of being in communication with the container body (50) and an upper end in communication with the upper gas outlet (334);
when the liquid heating container is in a tilted state, the mobile sealing member (320) in the anti-tilting assembly (30) in a lower position is capable of blocking the upper gas outlet (334) in a lower position, while the mobile sealing member (320) in the anti-tilting assembly (30) in an upper position is capable of opening the upper gas outlet (334) in an upper position.

2. The lid body assembly of claim 1, **characterized in that**, the cross-sectional area of the pressure releasing tube (113) is smaller than the cross-sectional area of the vapor passage.

3. The lid body assembly of any one of claims 1 to 2, **characterized in that**, the pressure releasing tube (113) is formed at the lower lid (10) and extends upwards, or formed at the anti-tilting assembly (30) and extends downwards; and the lower end of the pressure releasing tube (113) is located in the vapor inlet (110).

4. The lid body assembly of any one of claims 1 to 3, **characterized in that**, the pressure releasing tube (113) is arranged side by side with the vapor passage, or the pressure releasing tube (113) is arranged inside the vapor passage.

5. The lid body assembly of any one of claims 1 to 4, **characterized in that**, the pressure releasing tube (113) is located on the side of the vapor passage close to an outer edge of the lower lid (10).

6. The lid body assembly of any one of claims 1 to 5, **characterized in that**, on an upper surface of the lower lid (10) is provided a plug connection part which protrudes upwards and is connected with the lower end of the anti-tilting assembly (30) by plugging so that the anti-tilting assembly (30) is connected with the lower lid (10).

7. The lid body assembly of claim 6, **characterized in that**, the plug connection part is a connecting sleeve (112) formed at the periphery of the vapor inlet (110), and the lower end of the anti-tilting assembly (30) is formed with a tubular part (315) which extends downwards and is sleeved with the connecting sleeve (112) to form the vapor passage.

8. The lid body assembly of claim 7, **characterized in that**, a top wall of the pressure releasing tube (113) is higher than a top wall of the connecting sleeve (112), and the upper end of the pressure releasing tube (113) extends out of the connecting sleeve (112); the anti-tilting assembly (30) further comprises a positioning sleeve (316) formed in the vapor passage, and a lower end of the positioning sleeve (316) is sleeve-connected with the upper end of a pressure releasing tube (113).

9. The lid body assembly of any one of claims 1 to 8, **characterized in that**, the anti-tilting assembly (30) comprises:
an anti-tilting assembly base (310) and an anti-tilting assembly lid (330) that engage with each other in a snap-fit manner to enclose and form a hollow chamber, the interior of which hollow chamber is divided into a vapor chamber (312), a pressure releasing chamber (313) and a sealing member moving chamber (314), with the vapor chamber (312) in communication with the vapor passage, the pressure releasing chamber (313) in communication with the upper end of the pressure releasing tube (113), the mobile sealing member (320) arranged inside the sealing member moving chamber (314), the vapor chamber (312) separated from the pressure releasing chamber (313), the vapor chamber (312) in direct communication with the sealing member moving chamber (314), the pressure releasing chamber (313) in direct communication with the sealing member moving chamber (314), the upper gas outlet (334) arranged on a top wall of the anti-tilting assembly lid (330) and in communication with the sealing member moving chamber (314).

10. The lid body assembly of claim 9, **characterized in that**,
the sealing member moving chamber (314) further comprises a first end and a second end opposite to each other along a length direction, with the first end close to the outer edge of the lower lid (10), the second end away from the outer edge of the lower lid (10), the upper gas outlet (334) located right above the first end, the mobile sealing member (320) capable of blocking the upper gas outlet (334) when located at the first end;
a chamber bottom wall of the sealing member moving chamber (314) is arranged to descend from the first end to the second end along a height direction of the lid body assembly.

11. The lid body assembly of any one of claims 9 to 10, **characterized in that**, the anti-tilting assembly lid (330) comprises a lid top wall (331) and a lid side wall (332) surrounding the lid top wall (331) and extending downwards from the lid top wall (331), and a lower surface of the lid top wall (331) is provided with a guiding rib (333) capable of guiding the movement of the mobile sealing member (320) inside the sealing member moving chamber (314).

12. The lid body assembly of any one of claims 1 to 11, **characterized in that**, a gas guiding passage (210) is provided at a lower surface of the middle lid (20), and a vapor outlet (211) in communication with the outside is provided at a side wall of the middle lid (20) or of the lower lid (10), and ends of the gas guiding passage (210) are in communication respectively with the upper gas outlet (334) of the anti-tilting assembly (30) and the vapor outlet (211).

13. The lid body assembly of claim 12, **characterized in that**, there are two anti-titling assemblies (30) comprising a first anti-tilting assembly (340) and a second anti-tilting assembly (350);
the gas guiding passage (210) is of a Y-shaped general form, the three ends of which are in communication respectively with the upper gas outlet (334) of the first anti-tilting assembly (340), the upper gas outlet (334) of the second anti-tilting assembly (350) and the vapor outlet (211).

14. The lid body assembly of any one of claims 12 to 13, **characterized in that**, on an upper surface of a top wall of the anti-tilting assembly (30) is provided a gas nozzle (335) protruding upwards and arranged as surrounding the periphery of the upper gas outlet (334), the gas nozzle (335) being located in the gas guiding passage (210).

15. A liquid heating container, **characterized in that**, it comprises:
- a container body (50), a top of which is provided with an opening; and,
- the lid body assembly according to any one of claims 1 to 14, arranged to cover the opening.

16. The liquid heating container of claim 15, **characterized in that**, the liquid heating container further comprises a water pouring opening (510) and a handle (520) arranged opposite to each other, and a condensing passage is arranged inside the handle and in communication with the vapor passage.

17. The liquid heating container of claim 16, **characterized in that**,
there are two anti-tilting assemblies (30) which are arranged symmetrically along a connecting line between the water pouring opening (510) and the handle (520);
the pressure releasing tube (113) of any one of the anti-tilting assemblies (30) is located at the end of the vapor inlet (110) away from the handle (520).
